# EUROPEAN PATENT SPECIFICATION

(11) **EP 2 452 894 B1**
(45) Date of publication and mention of the grant of the patent: **04.04.2018**
(21) Application number: 11188497.9
(22) Date of filing: 09.11.2011
(51) Int. Cl.: B65D 85/804, A47J 31/36

(54) **A pod and an infusion group for preparing beverages**
Pad und Infusionsgruppe zur Zubereitung von Getränken
Dosette et groupe de perfusion pour préparer les boissons

(30) Priority: 10.11.2010 IT RE20100089
(43) Date of publication of application: 16.05.2012
(73) Proprietor: Coop Industria - Societa' Cooperativa, 40013 Castel Maggiore (Bologna) (IT)
(72) Inventor: Alberti, Vincenzo, 40013 Castel Maggiore (Bologna) (IT)
(74) Representative: Corradini, Corrado

(56) References cited:
- EP-A1- 1 500 358
- EP-A1- 1 654 966
- EP-A1- 2 070 828

## Description

This invention concerns a single-use pod for preparing beverages, typically coffee, tea, or other beverages, which are obtained by infusing or dissolving a granular or powder food substance, and an infusion group for machines which are designed for preparing such beverages, starting from a granular or powder food substance which is contained in a single-use pod.

As is known, a single-use pod for preparing beverages generally comprises a beaker-shaped body exhibiting a mouth delimited by an externally-projecting flange, a dose of food substance being contained in the beaker-shaped body, and a closing membrane being applied to the flange in order to seal the mouth of the beaker-shaped body.

Although all single-use pods maintain this basic structure, at present a great number of single-use pods exist which, while generally exhibiting slightly differing form and dimensions from one another, fall within two main categories: closed pods and open pods.

In closed pods, the beaker-shaped body and the closing membrane of the pod are both made of a continuous, impermeable material, such as to completely isolate the inner space containing the dose of food substance from the external environment.

This continuous, impermeable material is generally somewhat thin, and consequently the flange of the beaker-shaped body is also extremely thin, typically in the order of a few tenths of a millimetre.

In open pods, the beaker-shaped body and the closing membrane of the pod are perforated with holes which are sufficiently small to retain within the food substance, but large enough to permit the passage of the fluid, typically water, which is necessary to infuse or dissolve the food substance.

In this case, the material from which the beaker-shaped body and the closing membrane are made is usually much thicker, thus providing a pod which is much more rigid and robust than the closed type. Consequently the flange of the beaker-shaped body is also significantly thicker, typically in the order of several millimetres.

To protect the food substance and preserve its organoleptic properties, open pods are individually wrapped and supplied inside appropriate sealed envelopes which are made of a continuous impermeable material, unlike closed pods, which are usually supplied loose.

Each type of pod is generally destined to be used in a dedicated machine, which is therefore specifically configured to prepare beverages using only that specific type of pod.

Therefore at present a very large number of different machines exists, each of which can operate with only one specific type of pod. Document EP2070828A1 discloses a pod comprising a beaker-shaped body having a perimetral flange, which contains a soluble coffee substance and is closed by a sealing membrane. Nevertheless these machines all exhibit a rather similar structure, which schematically comprises a water boiler, an infusion group which is designed to receive the pod, and a pump for pumping the hot water from the boiler and feeding the hot water internally of the infusion group.

The infusion group usually comprises a cup-shaped body which is generally provided with a mouth delimited by a flange, which is designed to receive the pod; a closing body which is designed to close the mouth of the cup-shaped body, such as to enclose the pod in a closed infusion chamber; means for introducing hot water into the infusion chamber from the boiler; and means for delivering the beverage to outside the infusion chamber.

The closing body is generally unremovably constrained to the machine, while the cup-shaped body can be separable from the machine, or mobile on the machine between an open and a closed position of the infusion chamber, according to the type of machine.

Although each infusion group normally exhibits characteristics which differ at least slightly from those of other infusion groups, in such a way that the infusion groups can operate exclusively with a specific type of pod, the greatest differences between infusion groups depend on whether they operate with closed or with open pods.

Infusion groups for closed pods must in fact comprise means for piercing the pod which is contained inside the infusion chamber, before the hot water is fed in. In infusion groups for open pods these means would serve no purpose and are therefore totally absent.

Differently, infusion groups for open pods generally comprise a cup-shaped body, the flange at the mouth of which comprises a corresponding depression which is designed to receive the projecting flange of the pod, such that when the closing body abuts against the flange of the cup-shaped body, it hermetically seals the infusion chamber.

This depression is not present in infusion groups for closed pods. Since the flange of these pods is extremely thin, it is simply gripped between the flange of the cup-shaped body and the closing body, thus ensuring that the infusion chamber is hermetically sealed. Document EP1654966A1 discloses an infusion group comprising a cup-shaped body for accommodating the pod and a closing body for closing the pod inside the cup-shaped body. In the light of the foregoing, an aim of the invention is to eliminate the one-to-one correspondence that at present exists between single-use pods for preparing beverages and their relative machines, such as to enable simplification of the production processes of both pods and machines, thereby reducing costs.

Within the ambit of this dual objective, an aim of an embodiment of the invention is to provide a single-use pod for preparing beverages, which pod can be used effectively on a variety of different machines.

An aim of another embodiment of the invention is to provide a machine which is capable of using various different pods.

A further aim of the invention is to achieve the aforementioned aims within the ambit of simple, rational and relatively economical solutions.

These and/or other aims are achieved by the embodiments of the invention the characteristics of which are disclosed in the independent claims. The dependent claims delineate preferred or particularly advantageous aspects of these embodiments of the invention.

In detail, an embodiment of the invention provides a single-use pod for preparing beverages which comprises a beaker-shaped body of impermeable material exhibiting a mouth, the mouth being delimited by an outwardly-projecting perimetral flange; a substance for preparing the beverage, which is contained in the beaker-shaped body; a membrane of impermeable material which is applied on the perimetral flange such as to close the mouth of the beaker-shaped body; and a spacer ring made of stiff material, which is applied on the beaker-shaped body, is in contact with the perimetral flange on the opposite side thereof with respect to the closing membrane, and is removably constrained to the beaker-shaped body.

Thanks to this solution, the pod can be used by various different machines. The spacer ring can in fact be removed to enable the pod to be used in machines with a traditional infusion chamber for closed pods, or the spacer ring can be maintained associated to the beaker-shaped body, to enable the pod to be used in machines with an infusion group for open pods, i.e. an infusion group which is provided with a cup-shaped body, the flange of which comprises the depression which was mentioned in the preamble.

In an aspect of this embodiment, the spacer ring is constrained to the beaker-shaped body by means of a joint coupling.

This type of coupling makes it possible to fit and remove the spacer ring simply and rapidly, without requiring the user of the pod to perform particularly complicated or inconvenient operations.

The joint coupling can be obtained effectively by means of an element projecting from the side wall of the beaker-shaped body.

The projecting element can be shaped in such a way as normally to be destined to contrast the insertion or the removal of the spacer ring, but allowing the insertion or the removal of the spacer ring via a forcing action, i.e. following an elastic deformation of the projecting element of the side wall of the beaker-shaped body from which the projecting element projects.

This solution has the advantage of being particularly simple constructionally, both as regards fitting the spacer ring to, and subsequently removing the spacer ring from the beaker-shaped body.

the projecting element is preferably shaped as a continuous annular relief extending coaxially along an entire circumference of the side wall of the beaker-shaped body.

Alternatively, the projecting element might extend along only a portion of a circumference of the beaker-shaped body, possibly aided by other similar projecting protuberances which are separated from one another and distributed along the circumference.

In a further aspect of this embodiment of the invention, the lateral surface of the spacer ring comprises at least a flat surface.

The presence of this flat surface is advantageous since it may be necessary in order for the pod to be used by some types of infusion groups which exhibit a cup-shaped body with a depression the profile of which, in plan view, is multi-faceted.

For the same reason, the lateral surface of the spacer ring could also comprise a plurality of flat surfaces, which are possibly angularly equidistant from one another, which in plan view confers a more multi-faceted profile to them.

In a further aspect of this embodiment of the invention, the spacer ring is provided with an identifying element of the substance contained in the beaker-shaped body.

In this way, a user can easily determine what type of beverage can be obtained from the pod.

To exemplify, the identifying element may be a colour, for example the colour of the spacer ring or a coloured portion of the spacer ring, or it may be a code, for example a number, writing or even the usual name of the beverage. Another embodiment of the invention provides an infusion group for machines for preparing beverages from a substance which is contained in a single-use pod.

The infusion group comprises:
a cup-shaped body exhibiting a mouth delimited by a flange, the cup-shaped body being destined to receive the single-use pod;
a closing body which is designed to close the mouth of the cup-shaped body, such as to enclose the single-use pod inside an infusion chamber;
means for piercing the single-use pod which is contained inside the infusion chamber;
means for introducing a fluid, typically hot water, into the infusion chamber; and
means for delivering the beverage externally of the infusion chamber.

In this embodiment of the invention, the flange of the cup-shaped body also comprises a depression which is situated at the mouth thereof, and which is designed to coaxially receive an annular portion of the single-use pod. Thanks to this solution, the infusion group can use various different single-use pods.

In particular, it can use closed pods of the type which were referred to in the first embodiment of the invention, i.e. which are provided with an annular portion, realised as a spacer ring that will be received in the depression of the cup-shaped body; but it can also use open pods, which are in any case provided with an annular portion realized with a somewhat thick flange which is received in the depression of the cup-shaped body, similarly to the abovementioned spacer ring.

In an aspect of this embodiment of the invention, the depression of the cup-shaped body, in plan view, exhibits a profile which is complementary to the plan-view profile of the annular portion of the single-use pod.

This advantageously increases the stability of the pod inside the cup-shaped body of the infusion group, also improving the air tightness of the infusion chamber, and thus the machine's functionality.

In a further aspect of this embodiment of the invention, the means for piercing the single-use pod comprise at least a first sharp element projecting from the bottom of the cup-shaped body towards the interior of the infusion chamber, and at least a second sharp element projecting from the closing body towards the interior of the infusion chamber.

The sharp elements have the advantage of piercing closed pods effectively, thus allowing the hot water to pass through the pods from one side to the other, and suitably wetting the substance contained within.

Further, the sharp elements have the further advantage that they do not interfere with open pods, since conventionally, open pods exhibit grooves which are afforded on the external surface of the base of the beaker-shaped body and of the closing membrane respectively, and can receive the sharp elements without the sharp elements piercing the pod.

In a further aspect of this embodiment of the invention, at least one of the first sharp element and the second sharp element comprises a hole communicating with the means for delivering the beverage outside the infusion chamber.

This solution provides the advantage of enabling effective delivery of the beverage which is formed inside the pod.

In a still further aspect of this embodiment of the invention, at least one of the first sharp element and the second sharp element comprises a hole communicating with the means for introducing the fluid into the infusion chamber.

Similarly to the preceding solution, this solution has the advantage of enabling effective introduction of the water into the pod.

Finally, a further embodiment of the invention makes available a machine for preparing beverages from a substance which is contained in a single-use pod, the machine comprising the previously-described infusion group. Further characteristics and advantages of the invention will emerge from the following description, which is provided by way of a non-limiting example, with the aid of the appended figures of the drawings.
Figure 1 is a side view of a pod for preparing a beverage, in an embodiment of the invention.
Figure 2 is an enlarged section view of the detail II of figure 1.
Figure 3 is an exploded view in perspective elevation of an infusion group in an embodiment of the invention.
Figure 4 is a longitudinal section view of the infusion group of figure 3 without the filter pod.
Figure 5 is a section view of figure 4 in which the infusion group receives the pod of figure 1.
Figure 6 is an exploded view in perspective elevation of the infusion group of figure 3 which is prepared to receive a conventional open pod.
Figure 7 is the cross-section view of figure 4 in which the infusion group receives the open pod of figure 6.

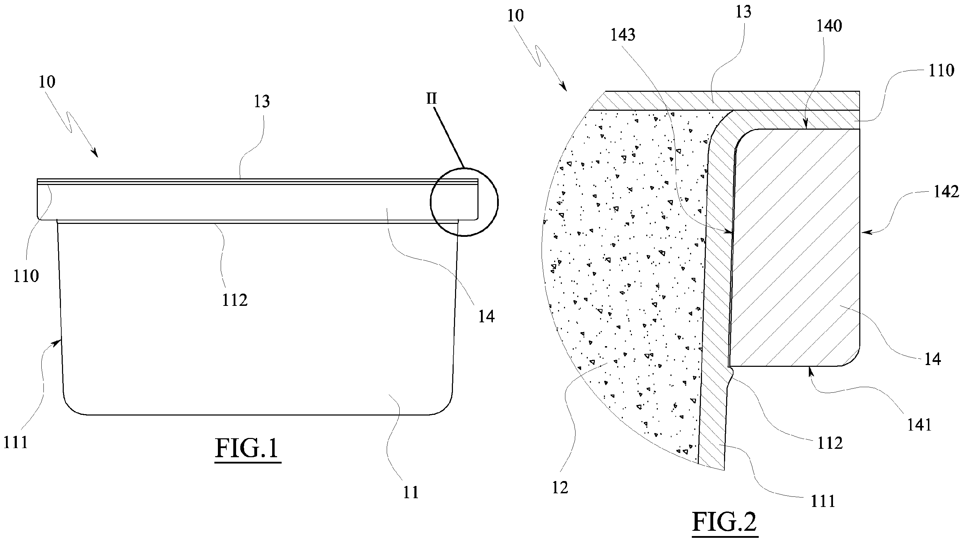

Figures 1 and 2 show a single-use pod 10 for preparing beverages, typically coffee, tea, or other beverages which are obtainable by infusing or dissolving a granular or powder food substance.

The pod 10 comprises a beaker-shaped body 11, i.e. a body which is shaped like a container, closed at the bottom and provided with an oppositely-positioned open mouth.

The beaker-shaped body 11 may exhibit any form at all, such as for example that of a truncated cone as in the figures, or can be cylindrical, hemispherical or any other shape.

The mouth of the beaker-shaped body 11 is delimited by a flat perimetral flange 110, which projects from the top of the side wall 111 of the beaker-shaped body 11, extending outwardly from the cavity.

The perimetral flange 110 is formed in a single body with the beaker-shaped body 11.

The beaker-shaped body 11 is made of an impermeable, continuous material, i.e. a material without holes or openings, such as to constitute an effective barrier to the passage of liquids, and preferably also of gases. Further, the material is somewhat slim, such that the beaker-shaped body 11 is generally deformable via the application of not excessively high pressure. Consequently the perimetral flange 110 is also somewhat slim, in the order of some tenths of a millimetre.

The beaker-shaped body 11 is preferably made of plastic, for example via a heat-forming process, although this does not exclude the possibility of its being made of other materials, among which aluminium for example.

The beaker-shaped body 11 contains a dose of granular or powder food substance 12 (see figure 2) which is destined to give rise to the beverage by infusing or dissolving in water.

The pod 12 also comprises a membrane 13 which is applied to the perimetral flange 110, such as to close the mouth of the beaker-shaped body 11 after the dose of food substance 12 has been introduced.

The closing membrane 13 is also made of an impermeable continuous material, and is fixed on the perimetral flange 110 such as to hermetically seal the food substance 12 from the external environment.

The closing membrane 13 is also somewhat slim, in the order of some tenths of a millimetre.

Preferably, the closing membrane 13 is made of aluminium and is fixed to the perimetral flange 110 by a heat-welding process, although it could be made using other materials, among which plastic, for example.

Finally the pod 10 comprises a spacer ring 14, which is positioned coaxially on the beaker-shaped body 11, contacts the perimetral flange 110 on the oppositely-positioned side with respect to the closing membrane 13, and is removably constrained to the beaker-shaped body 11.

In the illustrated example, the spacer ring 14 exhibits a quadrilateral (in the example slightly trapezoidal) cross-section, which makes available an upper flat surface 140 which is in directly in contact with the perimetral flange 110; an oppositely-positioned lower flat surface 141; an external side surface which is substantially cylindrical 142; and an oppositely-positioned internal side surface 143 in contact or almost in contact with the side wall 111 of the beaker-shaped body 11.

If required, the external side surface 142 can exhibit one or more flat surfaces which in plan view confer a substantially multi-faceted profile to it.

The external diameter of the spacer ring 14 is approximately the same as the maximum diameter of the perimetral flange 110 of the beaker-shaped body 11, while the thickness of the spacer ring 14 is in the order of a few millimetres.

The spacer ring 14 is made of a stiff material, for example plastic, via a moulding process, although it could also be made of other suitable stiff materials.

Further, the spacer ring 14 can be made with materials of a colour which differs according to the type of food substance 12 which is contained in the beaker-shaped body 11, or it could bear other types of elements identifying the content of the pod 10, for example a code.

As previously mentioned, the spacer ring 14 is removably constrained to the beaker-shaped body 11, in such a way that it can be removed and if necessary refitted in the above-described position several times.

In detail, the spacer ring 14 is removably constrained by means of a joint coupling which is obtained in this particular instance via an element 112 which projects from the side wall 111 of the beaker-shaped body 11 (see figure 2).

The projecting element 112 is preferably made in a single body with the beaker-shaped body 11.

The axial distance between the projecting element 112 and the perimetral flange 110 is approximately the same as the thickness of the spacer ring 14, while the maximum radius of the projecting element 12 (with respect to the axis of the beaker-shaped body 11) is at least slightly greater than the internal radius of the spacer ring 14.

in this way, the projecting element 112 is normally destined to oppose both the insertion and the subsequent removal of the spacer ring 14.

However, if the spacer ring 14 is forced slightly during insertion or removal, the projecting element 112 and/or the side wall 111 of the beaker-shaped body 11 to which the spacer ring 14 is associated can yield elastically, such that the projecting element 112 allows the spacer ring 14 to be inserted onto, and removed from the beaker-shaped body 11, thereafter snapping back into the previously-described non-deformed configuration, in which the projecting element 112 opposes insertion and removal of the spacer ring 14.

In the embodiment which is shown here, the projecting element 112 has the shape of a continuous annular relief which extends coaxially along an entire circumference of the side wall 111.

However it could extend along only a portion of a circumference of the beaker-shaped body, possibly being aided by further similar reliefs separate from one another and distributed along the circumference.

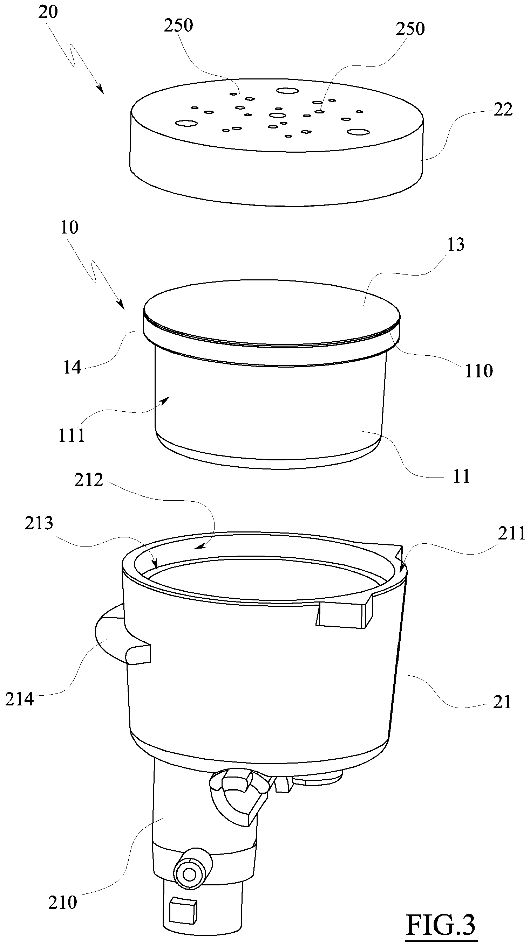

The pod 10 can by used by a machine which generally comprises a boiler for heating the water, an infusion group 20 (see figure 3) designed to receive the pod 10, and a pump which pumps the hot water from the boiler into the infusion group 20.

The pump and the boiler, the body of the machine 1, the hydraulic circuits and any accessory apparatus are not shown here or described in detail inasmuch as they are known to a skilled person in the field.

The infusion group 20 comprises a cup-shaped body 21 which is destined to receive the pod 10. At its base the cup-shaped body 21 exhibits a beverage delivery spout 210, and an oppositely-positioned mouth for introducing and extracting the pod 10, the mouth being delimited by a flat flange 211.

In detail, the flat flange 211 exhibits a depression 212, which is situated at the mouth, defines a widening of the mouth, and is destined to receive the spacer ring 14 of the pod 10 coaxially and substantially snugly; and an annular flat abutting plane 213, upon which the lower flat surface 141 of the spacer ring 14 rests.

The depth of the depression 212 is substantially the same as, or slightly smaller than the summed thicknesses of the spacer ring 14, the perimetral flange 110 of the beaker-shaped body 11, and the closing membrane 13.

In plan view, the profile of the depression 212 has a form which is complementary to the plan-view profile of the external surface 142 of the spacer ring 14.

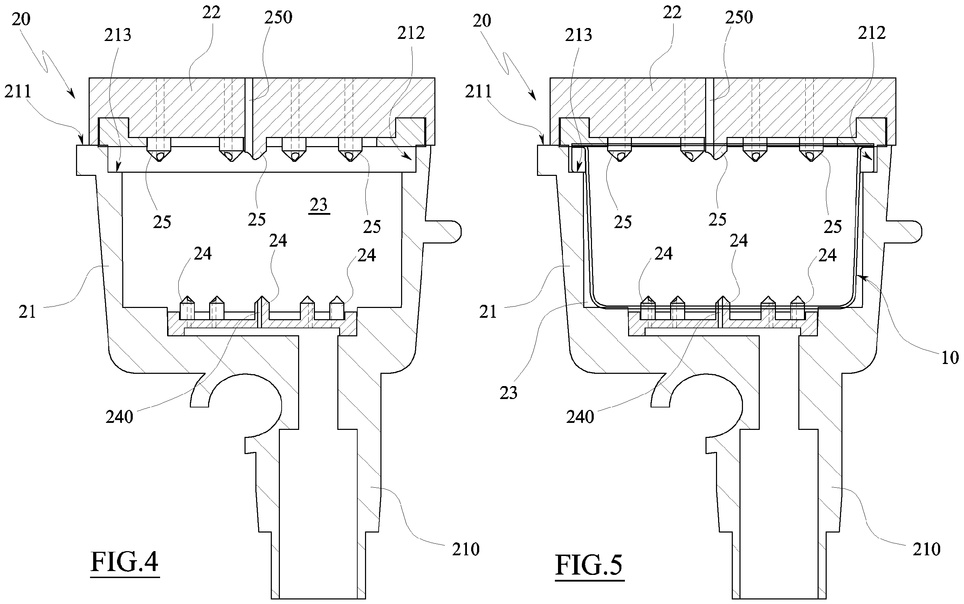

The infusion group 20 further comprises a cylindrical closing plate 22, which is destined to close the mouth of the cup-shaped body 21 by abutting the flange 211, such as to define a closed infusion chamber 23 (see figure 4) which completely encloses the pod 10 (see figure 5).

The infusion chamber 23 is hermetically closed by suitable seals, not illustrated because known in any case, interposed between the cup-shaped body 21 and the closing plate 22.

In the illustrated example, the closing plate 22 is unremovably constrained to the machine, while the cup-shaped body 21 is separable from, and fastenable to the machine by means of a threading system 214 enabling the cup-shaped body 21 to be moved axially closer to the closing plate 22, which remains immobile, up until the flange 211 abuts the closing plate 22. Alternatively, the cup-shaped body 21 could be unremovably associated to the machine and be axially mobile upon it, between an open position and a closed position of the infusion chamber 23.

As illustrated in figure 4, the base of the cup-shaped body 21 comprises a plurality of pins 24, in this case with a conical tip. The pins 24 are borne by a support plate which is accommodated in a cavity at the base of the cup-shaped body 21, and project towards the interior of the infusion chamber 23. Each of these pins 24 exhibits a central hole 240 which is in hydraulic communication with the beverage delivery spout 210.

Similarly, the closing plate 22 comprises a plurality of pins 25, also with a conical tip, which project towards the interior of the infusion chamber.

Each of the pins 25 exhibits a central hole 250 which is in hydraulic communication with the water supply pump.

The length of the pins 24, 25 and the depth of the cup-shaped body 21 are chosen in such a way that when the flange 211 of the cup-shaped body 21 is resting against the closing plate 22, the pins 24, 25 have pierced the base of the beaker-shaped body 11 and the closing membrane 13 of the pod 10 respectively, such that the relative central holes 240 and 250 communicate with the inner space of the pod (see figure 5).

At this point, hot water is fed from the boiler to the infusion chamber 23 through the central holes 250, in order for the water to mix with the food substance 12 which is contained in the pod 10, thus giving rise by infusion or by solution to a beverage which exits from the infusion chamber 23 via the central holes 240 and through the delivery spout 210.

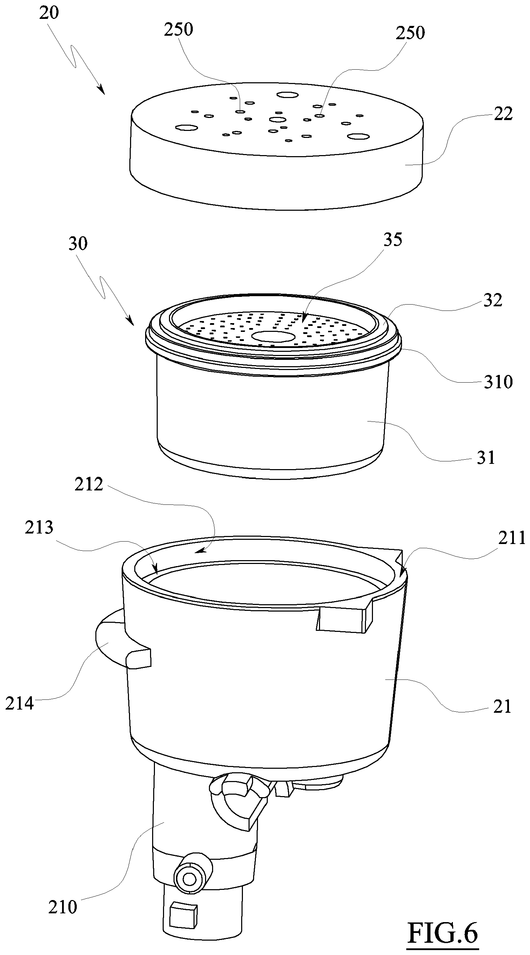

Note that the above-described infusion group 20 can use not only a pod 10 of the invention, but also a conventional open pod like the pod which is indicated by reference numeral 30 in figure 6.

Similarly to the preceding pod 10, the pod 30 comprises a beaker-shaped body 31 which is designed to contain the dose of food substance. The pod 30 also exhibits a mouth. which is delimited by an externally-projecting flange 310, and which is closed by a cover 32 which is attached to the flange 310. The beaker-shaped body 31 and the closing cover 32 are both perforated with holes which are sufficiently small to retain the food substance inside, but large enough to allow the passage of water.

In this case, the thickness of the walls of the beaker-shaped body 31 and the closing cover 32 is much greater than that of the preceding pod, being obtained for example via a moulding process for plastic material, such that positioning the closing cover 32 on the flange 310 defines an edge, the thickness of which is by itself comparable to that of the spacer ring 14 of the pod 10.

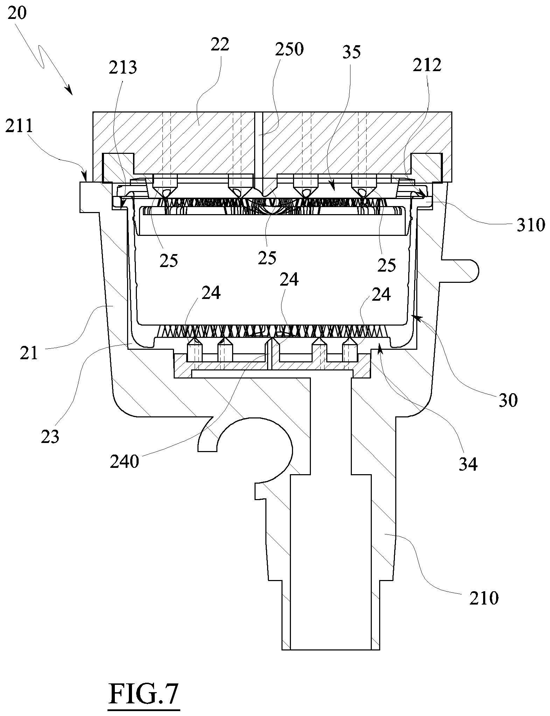

Therefore the pod 30 can be effectively accommodated inside the infusion chamber 23, which is defined by the cup-shaped body 21 and the closing plate 22 of the infusion group 20, as shown in figure 7.

Note also that the pod 30 is provided with two chamber-like recesses 34, 35 which are afforded in the external surface of the base of the beaker-shaped body 31 and the external surface of the closing cover 32 respectively, the depth of which is substantially the same as, or greater than the length of the pins 24, 25, in such a way that the pins 24, 25 are received in the recesses 34, 35, without piercing or in any way interfering with the pod 30.

In this case, the infusion group 20 functions in a totally similar way to the description herein above.

Obviously a person skilled in the art might introduce numerous modifications of a technical-applicational nature to the pod 10 and the infusion group 20 without thereby forsaking the ambit of the embodiment of the invention as it is claimed herein below.

## Claims

1. A pod (10) for preparing beverages, comprising a beaker-shaped body (11) made of impermeable material which exhibits a mouth delimited by an externally-projecting perimetral flange (110), a substance (12) for preparing a beverage contained in the cup-shaped body (11), and a membrane (13) made of an impermeable material and applied to the perimetral flange (110) such as to close the mouth of the beaker-shaped body (11), **characterised in that** the pod (10) comprises a spacer ring (14)made of stiff material, which is applied to the beaker-shaped body (11) and abuts the perimetral flange (110) on an opposite side thereof with respect to the sealing membrane (13) and is removably constrained to the beaker-shaped body (11).

2. The pod (10) of claim 1, **characterised in that** the spacer ring (14) is constrained to the beaker-shaped body (11) by means of a joint coupling.

3. The pod (10) of claim 2, **characterised in that** the joint coupling is obtained by means of at least an element (112) projecting from a side wall (111) of the beaker-shaped body (11).

4. The pod (10) of claim 3, **characterised in that** the projecting element (112) is a continuous annular relief which extends coaxially along an entire circumference of the side wall (111) of the beaker-shaped body (11).

5. The pod (10) of claim 1, **characterised in that** a lateral surface of the spacer ring (14) comprises at least a flat surface.

6. The pod (10) of claim 1, **characterised in that** the spacer ring (14) is provided with an element identifying the substance (12) which is contained in the beaker-shaped body (11).

7. The pod (10) of claim 5, **characterised in that** the identifying element is a colour.

8. The pod (10) of claim 5, **characterised in that** the identifying element is a code.

9. An infusion group (20) for machines for preparing beverages from a substance which is contained in a pod (10, 30), which group comprises:
a cup-shaped body (21) which is provided with a mouth, the mouth being delimited by a flange (211), which cup-shaped body (21) is destined to accommodate the pod (10);
a closing body (22) which is destined to close the mouth of the cup-shaped body (21), such that the pod (10) is enclosed inside the infusion chamber (23);
means (24, 25) for piercing the pod (10) which is contained inside the infusion chamber (23);
means (250) for introducing a fluid into the infusion chamber (23); and
means (240, 210) for delivering the beverage externally of the infusion chamber (23),
wherein the flange (211) of the cup-shaped body (21) comprises a depression (212) which is situated at the mouth, and which is destined to coaxially receive an annular portion (14, 310) of the pod (10),
wherein the means for piercing the pod comprise at least a first sharp element (24) projecting from the base of the cup-shaped body (21) towards the interior of the infusion chamber (23), and at least a second sharp element (25) projecting from the closing body (22) towards the interior of the infusion chamber (23),
wherein at least one (25) among the first and second sharp elements comprises a hole (250) which communicates with the means for introducing a fluid into the infusion chamber (23),
**characterised in that** at least the other one (24) among the first and second sharp elements comprises a hole (240) which communicates with the means (210) for delivering the beverage externally of the infusion chamber (23).

10. The group (20) of claim 9, **characterised in that** the depression (212) exhibits a profile in plan view which is complementary with a plan-view profile of the annular portion (14, 310) of the pod (10).

11. A machine for preparing beverages from a substance (12) which is contained in a pod (10), comprising an infusion group (20) of any one of the claims from 9 to 10.

## Patentansprüche

1. Hülse (10) zur Zubereitung von Getränken, umfassend einen becherförmigen Körper (11), der aus undurchlässigem Material besteht und eine Mündung aufweist, die durch einen nach außen hervorstehenden, umfangenden Flansch (110) begrenzt ist, eine Substanz (12) für die Zubereitung eines Getränks, die in dem napfförmigen Körper (11) enthalten ist, und eine Membran (13), die aus einem undurchlässigen Material besteht und derart am umfangenden Flansch (110) angebracht ist, dass sie die Mündung des becherförmigen Körpers (11) verschließt, **dadurch gekennzeichnet, dass** die Hülse (10) einen Abstandshalterring (14) aus steifem Material umfasst, der an dem becherförmigen Körper (11) angebracht ist und an einer der Dichtungsmembran (13) gegenüberliegenden Seite des umfangenden Flansches (110) an selbigem anliegt und entfernbar am becherförmigen Körper (11) befestigt ist.

2. Hülse (10) nach Anspruch 1, **dadurch gekennzeichnet, dass** der Abstandshalterring (14) mittels einer Verbindungskopplung an dem becherförmigen Körper (11) angebracht ist.

3. Hülse (10) nach Anspruch 2, **dadurch gekennzeichnet, dass** die Verbindungskopplung mittels mindestens eines Elements (112) erzielt wird, das aus einer Seitenwand (111) des becherförmigen Körpers (11) hervorsteht.

4. Hülse (10) nach Anspruch 3, **dadurch gekennzeichnet, dass** das hervorstehende Element (112) eine durchgehende ringförmige Auskragung ist, die sich koaxial entlang eines gesamten Umfangs der Seitenwand (111) des becherförmigen Körpers (11) erstreckt.

5. Hülse (10) nach Anspruch 1, **dadurch gekennzeichnet, dass** eine seitliche Fläche des Abstandshalterrings (14) mindestens eine ebene Fläche umfasst.

6. Hülse (10) nach Anspruch 1, **dadurch gekennzeichnet, dass** der Abstandshalterring (14) mit einem Element versehen ist, das die Substanz (12) identifiziert, die in dem becherförmigen Körper (11) enthalten ist.

7. Hülse (10) nach Anspruch 5, **dadurch gekennzeichnet, dass** das Identifizierungselement eine Farbe ist.

8. Hülse (10) nach Anspruch 5, **dadurch gekennzeichnet, dass** das Identifizierungselement ein Code ist.

9. Brühgruppe (20) für Maschinen zur Zubereitung von Getränken aus einer Substanz, die in einer Hülse (10, 30) enthalten ist, wobei die Gruppe Folgendes umfasst:
einen napfförmigen Körper (21), der mit einer Mündung versehen ist, wobei die Mündung durch einen Flansch (211) begrenzt ist, wobei der napfförmige Körper (21) dafür vorgesehen ist, die Hülse (10) unterzubringen,
einen Verschlusskörper (22), der dafür vorgesehen ist, die Mündung des napfförmigen Körpers (21) derart zu verschließen, dass die Hülse (10) im Inneren der Brühkammer (23) eingeschlossen ist,
Mittel (24, 25) zum Durchstechen der Hülse (10), die im Inneren der Brühkammer (23) enthalten ist,
Mittel (250) zum Einführen eines Fluids in die Brühkammer (23) und
Mittel (240, 210) zum Ausgeben des Getränks nach außerhalb der Brühkammer (23),
wobei der Flansch (211) des napfförmigen Körpers (21) eine Vertiefung (212) umfasst, die sich an der Mündung befindet und dafür vorgesehen ist, einen ringförmigen Abschnitt (14, 310) der Hülse (10) koaxial aufzunehmen,
wobei die Mittel zum Durchstechen der Hülse mindestens ein erstes scharfes Element (24) umfassen, das vom Boden des napfförmigen Körpers (21) zum Inneren der Brühkammer (23) hervorsteht, und mindestens ein zweites scharfes Element (25), das von dem Verschlusskörper (22) zum Inneren der Brühkammer (23) hervorsteht,
wobei mindestens eines (25) des ersten und des zweiten scharfen Elements eine Öffnung (250) umfasst, die mit den Mitteln zum Einführen eines Fluids in die Brühkammer (23) in Verbindung steht,
**dadurch gekennzeichnet, dass** das mindestens andere eine (24) des ersten und des zweiten scharfen Elements eine Öffnung (240) umfasst, die mit den Mitteln (210) zum Ausgeben des Getränks nach außerhalb der Brühkammer (23) in Verbindung steht.

10. Gruppe (20) nach Anspruch 9, **dadurch gekennzeichnet, dass** die Vertiefung (212) in der Draufsicht ein Profil aufweist, das sich mit einem Draufsichtprofil des ringförmigen Abschnitts (14, 310) der Hülse (10) ergänzt.

11. Maschine zur Zubereitung von Getränken aus einer Substanz (12), die in einer Hülse (10) enthalten ist, eine Brühgruppe nach einem der Ansprüche 9 bis 10 umfassend.

## Revendications

1. Capsule (10) pour la préparation de boissons, comprenant un corps en forme de gobelet (11), se composant d'un matériau imperméable, qui présente une ouverture délimitée par un rebord périmétrique faisant saillie vers l'extérieur (110), une substance (12) pour la préparation d'une boisson, contenue dans le corps en forme de gobelet (12), et une membrane (13) se composant d'un matériau imperméable et appliquée sur le rebord périmétrique (110) de façon à fermer l'ouverture du corps en forme de gobelet (11), **caractérisée en ce que** la capsule (10) comprend une rondelle d'espacement (14), se composant d'un matériau rigide, qui est appliquée sur le corps en forme de gobelet (11) et est contigüe au rebord périmétrique (110) sur un côté opposé de ce dernier par rapport à la membrane d'étanchéité (13) et est contrainte de façon amovible au corps en forme de gobelet (11).

2. Capsule (10) selon la revendication 1, **caractérisée en ce que** la rondelle d'espacement est contrainte au corps en forme de gobelet (11) au moyen d'un accouplement par joint.

3. Capsule selon la revendication 2, **caractérisée en ce que** l'accouplement par joint est obtenu au moyen d'au moins un élément (112) faisant saillie depuis une paroi latérale (111) du corps en forme de gobelet (11).

4. Capsule selon la revendication 3, **caractérisée en ce que** l'élément faisant saillie (112) est un relief annulaire continu qui s'étend coaxialement le long d'une circonférence complète de la paroi latérale (111) du corps en forme de gobelet (11).

5. Capsule selon la revendication 1, **caractérisée en ce qu'**une surface latérale de la rondelle d'espacement (14) comprend au moins une surface plate.

6. Capsule selon la revendication 1, **caractérisée en ce que** la rondelle d'espacement (14) est dotée d'un élément identifiant la substance (12) qui est contenue dans le corps en forme de gobelet (11).

7. Capsule selon la revendication 5, **caractérisée en ce que** l'élément d'identification est une couleur.

8. Capsule selon la revendication 5, **caractérisée en ce que** l'élément d'identification est un code.

9. Groupe d'infusion (20) pour des machines préparant des boissons à partir d'une substance qui est contenue dans une capsule (10, 30) ; ledit groupe comprenant :
un corps en forme de gobelet (21) qui est doté d'une ouverture, l'ouverture étant délimitée par un rebord (211), ledit corps en forme de gobelet (21) est destiné à recevoir la capsule (10);
un corps d'obturation (22) qui est destiné à fermer l'ouverture du corps en forme de gobelet (21), de sorte que la capsule (10) est enfermée à l'intérieur de la chambre d'infusion (23);
moyens (24, 25) pour percer la capsule (10) qui est contenue à l'intérieur de la chambre d'infusion (23) ;moyen (250) pour l'introduction d'un liquide dans la chambre d'infusion (23); et
moyens (240, 210) pour la distribution de la boisson à l'extérieur de la chambre d'infusion (23),
dans lequel le rebord (211) du corps en forme de gobelet (21) comprend une cavité (212) qui est située au niveau de l'ouverture et qui est destinée à coaxialement recevoir une partie annulaire (14, 310) de la capsule (10),
dans lequel les moyens pour percer la capsule comprennent au moins un premier élément pointu (24) faisant saillie depuis la base du corps en forme de gobelet (21) vers l'intérieur de la chambre d'infusion (23), et au moins un second élément pointu (25) faisant saillie depuis le corps d'obturation (22) vers l'intérieur de la chambre d'infusion (23),
dans lequel au moins un élément pointu (25) parmi le premier et le second éléments pointus comprend un orifice (250) qui communique avec le moyen pour l'introduction d'un liquide dans la chambre d'infusion (23),
**caractérisé en ce qu'**au moins l'autre élément pointu (24) parmi le premier et le second éléments pointus comprend un orifice (250) qui communique avec le moyen (210) pour la distribution de la boisson à l'extérieur de la chambre d'infusion (23).

10. Groupe (20) selon la revendication 9, **caractérisé en ce que** la cavité (212) présente un profil en vue en plan qui est complémentaire à un profil en vue en plan de la partie annulaire (14, 310) de la capsule (10).

11. Machine pour la préparation de boissons à partir d'une substance (12) qui est contenue dans une capsule (10), comprenant un groupe d'infusion (20) selon l'une quelconque des revendications 9 à 10.
